# EUROPÄISCHE PATENTSCHRIFT

(11) **EP 1 144 169 B1**
(45) Veröffentlichungstag und Bekanntmachung des Hinweises auf die Patenterteilung: **13.08.2003**
(21) Anmeldenummer: 00900015.9
(22) Anmeldetag: 04.01.2000
(51) Int. Cl.: B29B 13/02, C08G 63/80, C08G 63/88, B29B 13/06

(54) **VORRICHTUNG UND VERFAHREN ZUM BEHANDELN VON KUNSTSTOFFMATERIAL**
DEVICE AND METHOD FOR TREATING PLASTIC MATERIAL
DISPOSITIF ET PROCEDE POUR TRAITER UNE MATIERE PLASTIQUE

(30) Priorität: 22.01.1999 DE 19902458
(43) Veröffentlichungstag der Anmeldung: 17.10.2001
(73) Patentinhaber: BÜHLER AG, 9240 Uzwil (CH)
(72) Erfinder: BORER, Camille, CH-8247 Flurlingen (CH); MÜLLER, Martin, CH-9240 Uzwil (CH); TERRASI, Filippo, CH-9244 Niederuzwil (CH); GEISSBÜHLER, Hans, CH-9524 Zuzwil (CH)
(86) Internationale Anmeldenummer: CH0000007
(87) Internationale Veröffentlichungsnummer: WO00043182

(56) Entgegenhaltungen:
- EP-A- 0 597 155
- EP-A- 0 712 703
- WO-A-94/01484
- CH-A- 665 473
- US-A- 3 544 525
- US-A- 3 756 990
- US-A- 4 161 578
- US-A- 4 226 973
- US-A- 4 584 366
- US-A- 5 052 123
- US-A- 5 119 570
- US-A- 5 516 880

## Beschreibung

Die Erfindung bezieht sich auf eine Vorrichtung nach dem Oberbegriff des Anspruches 1 sowie auf ein Verfahren mit den Oberbegriffsmerkmalen des Anspruches 7.

Ein derartiges Verfahren ist beispielsweise aus der EP-A-0 712 703 bekannt geworden. Wenn ein solches Verfahren in der Praxis durchgeführt wird, zeigt das Endprodukt gewisse, nicht unbeträchtliche Mängel:
- das Produkt ist hydrolysiert, d.h. teilweise abgebaut, und daher von ungenügender Qualität;
- im Endprodukt ist ein relativ hoher Anteil an Staub enthalten, was einerseits Materialverlust und anderseits höhere Kosten pro Gewichtseinheit des Endproduktes bedeutet;
- der Kristallisationsgrad des Endproduktes ist ziemlich unterschiedlich und der Amorphanteil relativ hoch.

Ein ähnliches Verfahren ist auch aus der WO 94/01484 bekannt, bei dem in der Behandlungsstufe der Kristallisation mit einer Kristallisationstemperatur von weniger als 145°C gearbeitet wird. Angepasst an die dabei langsamere Kristallisationsgeschwindigkeit wird bei diesem Verfahren die Behandlungszeit ausreichend lang gewählt (ca. 0,5 bis 1 Stunde).

Die US-A-5,516,880 beschreibt ein System für die Festphasen-Polymerisation von Polymeren, bei dem kaltes amorphes Polymer in einen Kristallisator eingeleitet und erhitzt wird, um das Polymer zu kristallisieren. Das kristallisierte Polymer wird dann in einen Reaktor überführt, in welchem die Polymerisation des Polymers stattfindet. Das heisse Polymerprodukt des Reaktors wird dann in einen Wirbelbettkühler zum Kühlen des polymerisierten Produkts geführt. Der Wirbelbettkühler ist so ausgelegt, dass das zu kühlende Polymerprodukt den Kühler entlang eines horizontalen Zick-Zackpfades durchläuft, wobei über einen Lochboden von unten her Kühlgas durch das sich horizontal fortbewegende Polymermaterial geleitet wird.

Der Erfindung liegt die Aufgabe zugrunde, ein Produkt, z.B. Flaschengranulat aus PET oder Polyestermaterial für Reifencord usw., besserer Qualität mit geringem Staubanteil und besserer Kristallinität zu schaffen. Dies gelingt erfindungsgemäss durch die kennzeichnenden Merkmale des Anspruches 1 bzw. des Anspruches 7.

Ausgangspunkt der Erfindung ist die Erkenntnis, dass man die Produktionsparameter bisher etwas sorglos unter einseitiger Ausrichtung auf rasche Produktion gewählt hat.

Es wurde beispielsweise gefunden, dass eine langsamere Aufheizung beim Kristallisieren mit tieferen Temperaturen eine schonendere und ökonomischere Produktion erlaubt, wobei gegebenenfalls sogar Luft als Behandlungsmedium statt des sonst gebräuchlichen Stickstoffes eingesetzt werden kann.

Ferner wurde festgestellt, dass die bisherigen, relativ hohen Gastemperaturen von mehr als 195°C nicht nur zu einem Abbau des Produktes führen und damit seine Qualität verschlechtern, sondern in den bisher verwendeten Apparaturen auch zu hohen Wärmeverlusten führt. Es ist beispielsweise aus der US-A-5,119,570 bekannt, Vorkristallisation und Kristallisation in gesonderten Apparaten durchzuführen. Gesonderte Apparate bedeuten aber auch ein relativ hohes Verhältnis von Oberfläche: Volumen, was Wärmeverluste fördert. In der oben genannten EP-A- werden zwar Vorkristallisation und Kristallisation in einer gemeinsamen Vorrichtung durchgeführt, was aber gleichtalls zu keiner Optimierung führt.

Aus diesen Erkenntnissen heraus wurden die kennzeichnenden Merkmale des Anspruches 1 entwickelt, die eine kompakte und kostengünstige Bauweise bei gleichzeitig minimierten Wärmeverlusten erbringt, wobei die Geringfügigkeit der Wärmeverluste auch dazu führt, die Bedingungen der Kristallisation besser unter Kontrolle halten zu können, so dass man auch von dieser Seite her nicht gezwungen ist, hohe Behandlungstemperaturen anzuwenden. Die Vorteile liegen aber vor allem darin, dass der Gasdurchsatz für die Abteile aus einer einzigen Gasquelle geringer sein kann als bisher, und dass die Anlage insgesamt eine kleinere Bauhöhe ergibt, was zu Raum- und Kostenersparnis führt. Zwar ist ein Kristallisator mit einem rotationssymmetrischen Gehäuse aus der CH-A-665 473 bekannt, doch ist dieser nicht zur Durchführung einer Vorkristallisation und einer Kristallisation ausgebildet bzw. geeignet, d.h. er benötigt eine zusätzliche Vorrichtung für einen gesonderten Kristallisationsschritt.

Während die Bahn des die Vorrichtung durchlaufenden Kunststoffmaterials bei der genannten EP-A- so verläuft, dass mit hohem Luftdurchsatz gearbeitet werden muss, um ein Sprudelbett zu erzeugen, dass das Material jeweils über einen Freiraum oberhalb einer Zwischenwand in das jeweils nächste Abteil schleudert, ist gemäss Anspruch 1 auch vorgesehen, dass die Bahn durch Anordnung von Freiraum bzw. Freiräumen und Entleerungsöffnung jeweils auf unterschiedlichen Niveaus im Längsschnitt durch den Behandlungsraum etwa mäanderförmig gestaltet ist. Während nämlich das bekannte Darüberschleudern zu recht unterschiedlichen Verweilzeiten der einzelnen Materialteile führt, wird die Verweilzeit durch die erfindungsgemässe Massnahme besser kontrolliert, wobei sich gezeigt hat, dass damit ein ausgezeichneter Kristallisationsgrad mit vernachlässigbarem Amorphanteil erzielt werden kann. Bei einer mäanderförmigen Bannführung dagegen kann die durchströmende Luftmenge reduziert werden, wobei im Falle der bodenseitig gelegenen Freiräume oder Öffnungen noch hinzukommt, dass sich auch in einem Wirbelbett eine gewisse Aufteilung des behandelten Materials nach seiner Dichte ergibt, wobei spezifisch schwereres Material eher im Bodenbereich ist. Wenn nun auch die Dichteunterschiede zwischen amorphen und kristallisiertem Material im Wirbelbett nicht sehr hoch sind, so spielt doch auch eine gewisse Rolle, dass das spezifisch schwerere, bodenseitige Material bereits in höherem Masse auskristallisiert ist, als das weiter oben wirbelnde, so dass aus den unteren Freiräumen vornehmlich das Material mit einem gewissen Kristallisationsfortschritt dem nächsten Abteil (oder der Entleerungsöffnung) zugeführt wird.

Das erfindungsgemäße Verfahren beginnt - entsprechend den oben besprochenen Erkenntnissen - mit relativ niedrigen, das Material schonend behandelnden Temperaturen. Das erfordert zunächst zwar etwas längere Zeit, ergibt aber die Voraussetzungen für ein Material besserer Qualität, wobei die dabei, im Vergleich zum Stand der Technik, verloren gegangene Zeit durch die nachfolgende kürzere Behandlungsdauer in der Vorerhitzung bzw. Vorkondensation durchaus wettgemacht wird. Bevorzugt ist auch die Ausbildung als Wirbelbett, so dass Rührorgane innerhalb des Behandlungsraumes (vgl. die US-A-4,064,112 und 4,161,578) - die, wie sich gezeigt hat, zu hohen Verlusten durch starke Staubentwicklung führen - entbehrlich sind. Dabei sei darauf hingewiesen, dass die Zweiteilung der Kondensation in eine Vorkondensation und die Nachkondensation mit unterschiedlichen Behandlungsbedingungen bereits in der US-A-3,756,990 vorgeschlagen worden ist und auch hier die bevorzugte Durchführungsart für das erfindungsgemässe Verfahren darstellt. Dem entspricht auch eine Endtemperatur des Materials von wenigstens 185°C, vorzugsweise aber wenigstens 200°C, Insbesondere etwa 220°C.

Am Stande der Technik nach der EP-A-0 712 703 wurde oben u.a. die Ungleichmässigkeit der Qualität des Endproduktes kritisiert. Der Stand der Technik hat offensichtlich die Mängel des verwendeten Kristallisationsapparates mit der Zufallsverteilung der Verweilzeit erkannt und hat für die nachfolgende Erhitzung einen mit rotierenden Umwälzorganen versehenen Behälter vorgesehen. Naturgemäss aber sind, wie gefunden wurde, gerade diese Umwälzorgane für die Erzeugung eines übermässigen Staubanteiles verantwortlich. Die Erfindung geht daher - auch im Hinblick auf eine schonendere und kontrolliertere Behandlung des Materials - einen anderen Weg, indem das kristallisierte Material in die Form eines, im Querschnitt viereckigen, insbesondere rechteckigen, Schüttgutstromes im wesentlichen gleichmässiger Schüttung über den Querschnitt gebracht und jeweils von einer Seite des Viereckquerschnittes her mit Behandlungsgas durchströmt wird. Dies bedeutet, dass durch diese Querschnittsform über die gesamte Einströmseite für das Gas gleiche Bedingungen herrschen, wozu die im wesentlichen gleichmässiger Schüttdichte beiträgt. Dies kann noch verbessert werden, indem das Verhältnis der Rechteckseiten des Querschnittes des Schüttgutstromes etwa 1:2 bis 1:15, vorzugsweise in einem Bereich von 1:3 bis 1:10 liegt, wobei das Behandlungsgas von der jeweils grösseren Rechteckseite her durch den Schüttgutstrom geleitet wird. Damit unterscheidet sich das erfindungsgemässe Verfahren von allen jenen, bei denen über den Querschnitt unterschiedliche Dicken des Schüttgutstromes und/oder unterschiedliche Gasströmungsverhältnisse über den Querschnitt herrschen.

Die Vorkristallisation und die Kristallisation benötigen zur schonenderen Behandlung zweckmässig einen Zeitraum von 10 bis 80 Minuten, vorzugsweise 15 bis 40 Minuten, insbesondere von etwa 20 bis 30 Minuten. Es wurde oben davon gesprochen, dass die nachfolgende Erhitzung dann erfindungsgemäß durch Abkürzung dieses Verfahrensschrittes effizienter gestaltet wird. Dies erfolgt nach der vorliegenden Erfindung vorzugsweise so, dass die auf die Kristallisation folgende Erhitzung, einschliesslich einer Vorkondensation, in einem Zeitraum von 60 bis 120 Minuten, insbesondere von etwa 90 Minuten, durchgeführt wird.

Weitere Einzelheiten der Erfindung ergeben sich an Hand eines in der Zeichnung schematisch dargestellten, bevorzugten Ausführungsbeispieles. Es zeigen:
- Fig. 1: ein Ablaufschema des erfindungsgemäßen Verfahrens;
- Fig. 2: einen Längsschnitt durch ein Ausführungsbeispiel eines erfindungsgemässen Kristallisators für Vor- und Nachkristallisation;
- Fig. 3: einen Querschnitt entlang der Linie III-III der Fig. 2;
- Fig. 4: eine Schemazeichnung mit einem Längsschnitt durch eine beim erfindungsgemäßen Verfahren bevorzugt zur Anwendung kommende Vorrichtung zum Vorerhitzen und Kondensieren sowie Kühlen, zu der
- Fig. 5: einen Querschnitt nach der Linie V-V der Fig. 4 veranschaulicht.

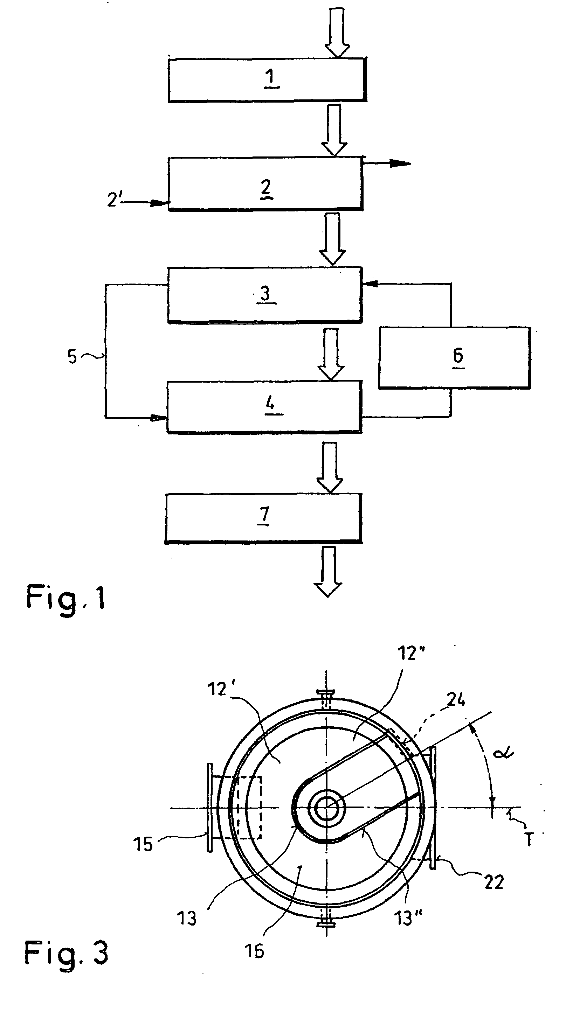

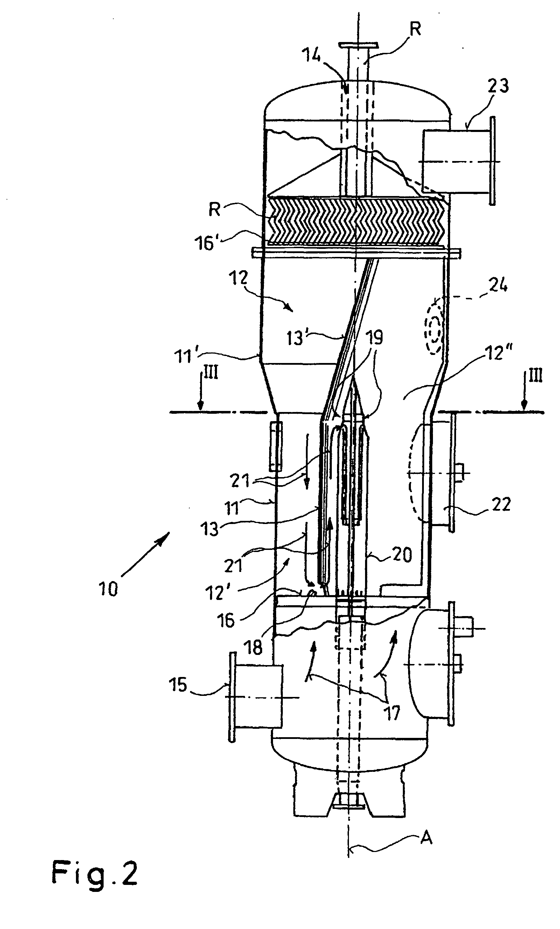

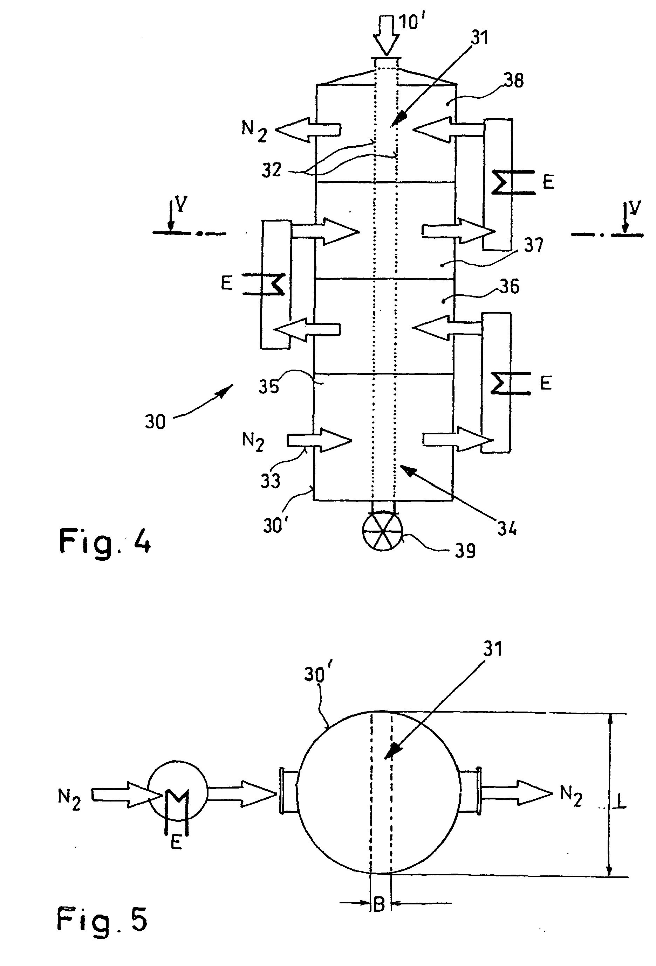

Gemäß Fig. 1 wird in einer Vorstufe 1 des erfindungsgemäßen Verfahrens amorphes Kunststoffgranulat, insbesondere Polyäthylenterephthalat, hergestellt, d.h. im wesentlichen extrudiert und zu Pellets zerschnitten. Das so hergestellte amorphe Kunststoffmaterial gelangt in der ersten Stufe des erfindungsgemäßen Verfahrens in einen Kristallisator 2, der zweckmässig eine Vorkristallisation und eine Nachkristallisation umfasst, wie es an sich Stand der Technik ist, unten aber an Hand einer erfindungsgemässen Ausführungsform in den Fig. 2 und 3 noch erläutert werden wird.

Das Kunststoffmaterial kommt in Stufe 2 etwa mit Umgebungstemperatur. Innerhalb der Stufe 2 erfolgt eine Gasbehandlung mit heissem Inertgas, wie Stickstoff, der an einem Gaseingang 2' mit relativ niedriger Temperatur (im Vergleich zum Stand der Technik) von beispielsweise 165°C bis 185°C, z.B. 170°C bis 180°C eingeführt wird, um eine schonende Behandlung des Kunststoffmaterials zu erreichen. Die Verweilzeit im Kristallisator 2 wird dementsprechend lieber etwas länger gewählt, als dies im Stand der Technik vorgeschlagen wurde, nämlich mit 10 bis 80 Minuten, vorzugsweise 20 bis 40 Minuten, insbesondere von etwa 30 Minuten. Durch die relativ niedrige Temperatur und die relativ lange Verweilzeit, wird eine gleichmässige und schonende Behandlung erreicht, und es hat sich gezeigt, dass mit diesem Verfahren eine praktisch vollständige Kristallisation des Materials erreicht werden kann. Versuche haben gezeigt, dass von dem aus der Stufe 2 austretenden Kunststoffmaterial höchstens 1% amorph geblieben ist, im allgemeinen aber weniger. Danach hat das Kunststoffmaterial eine Endtemperatur von etwa 135°C bis 180°C angenommen und verlässt so die Stufe 2.

Das so bis auf maximal 180°C erhitzte Material muss nun weiter erhitzt werden, um so eine Kondensationsreaktion auszulösen. Zweckmässig kann dazu ein Vorerhitzer 3 vorgesehen werden, dem der eigentliche Reaktor 4 folgt. Die beiden Stufen sind hinsichtlich des Gaskreislaufes 5 (z.B. Stickstoff) untereinander verbunden, wobei dazwischen eine Gasreinigungsstufe 6 geschaltet ist, bevor das Gas, welches den Kreislauf 5 einmal durchlaufen hat, wieder dem Vorerhitzer 3 zugeführt wird.

Die hier gezeigte Zweistufigkeit des Kondensationsverfahrens ist üblich und zweckmässig, aber nicht unbedingt erforderlich. Das in Fig. 1 gezeigte Schema widerspiegelt eigentlich nur die Tatsache, dass zweckmässig zwei hintereinander geschaltete Einrichtungen 3 und 4 vorgesehen sind. In der Praxis, kann aber die Vorerhitzung zur Aufheizung des Kunststoffmaterials auf etwa 180°C (falls das Material mit einer niedrigeren Temperatur eintritt) gesondert in einer Heizeinrichtung und anschliessend die Kondensation in einem oder mehreren Schritten durchgeführt werden. Aus Effizlenzgründen ist es aber günstiger, wenn Vorheizung und Vorkondensation, gegebenenfalls aber auch die Kondensation, in einer Vorrichtung zusammengefasst sind. Beispielsweise wäre es denkbar, Vorerhitzer bzw. Vorkondensator und Kondensator (Reaktor) in einer einzigen Vorrichtung zusammenzufassen, wobei es dann zweckmässig ist, mehrere Gasein- und -auslässe in unterschiedlichen Höhen des vertikalen Reaktors vorzusehen, um ihn in einzelne Zonen mit unterschiedlichen Gastemperaturen und/oder -mengen und/ oder - geschwindigkeiten zu unterteilen.

Während der Reaktor 4 in herkömmlicher Weise als Wanderbett- oder Festbettreaktor mit einem Rohr ausgebildet sein wird, durch welches das Kunststoffmaterial mit kontrollierter Geschwindigkeit hindurchläuft, wird eine bevorzugte Ausführungsform des Vorerhitzers 3 später an Hand der Fig. 4 und 5 beschrieben werden. Wenn von einer-"kontrollierten Geschwindigkeit" innerhalb des Reaktors 4 die Rede ist, so kann eine solche durch Einbau von dachartigen, sich quer zur Längsachse erstreckenden länglichen Einbauten erreicht werden, die einerseits eine bremsende Wirkung auf das Material ausüben und so ein zu rasches Durchfliessen verhindern, anderseits durch die nach oben spitzer werdende Dachform eine Trennung der einzelnen Partikel voneinander begünstigen, die an sich sehr zum Kleben neigen können.

Der Vorerhitzer 3 kann zwar einstufig aufgebaut sein, weist aber bevorzugt mindestens zwei, gegebenenfalls bis zu acht, Stufen auf, wobei die Gastemperatur zweckmässig von Stufe zu Stufe zunimmt Am Ende des Vorerhitzers 3 wird sich je nach Ausbildung eine Materialtemperatur von 190 bis 235°C ergeben, wobei im dargestellten Ausführungsbeispiel mit den beiden Stufen 3 und 4 eine Materialtemperatur von etwa 220°C das Übliche sein wird.

Anschliessend sollte die Reaktion möglichst rasch abgebrochen werden, zu welchem Zwecke ein Kühler 7 nachgeschaltet ist, aus dem dann das nachkondensierte PET-Material austritt. Ebenso könnte es aber auch ein Polyolefin, PEN oder PA sein. Wenn eine Vorkühlung bereits am Ende des Reaktors 4 erfolgt, so dass das Kunststoffmaterial mit einer deutlich unter 185°C liegenden Temperatur, beispielsweise mit etwa 160°C austritt, so wird es für den Kühler 7 nicht mehr erforderlich sein, inertgas zu verwenden, und es kann mit Luft gekühlt werden.

In Fig. 2 ist ein erfindungsgemässer Kristallisator 10 dargestellt, der rotationssymetrischen, insbesondere zylindrischen (vgl. Fig. 3), von Wänden 11 umgebenen Behandlungsraum 12 zur Aufnahme des von der. Vorstufe 1 (Fig. 1) kommenden stückigen bzw. pelletartigen Kunststoffmaterials aufweist. Dieser Behandlungsraum 12 ist zur kontrollierteren Beherrschung von Vorkristallisation mit äusserlichem Antrocknen der Pellets und Kristallisation in mindestens zwei Behandlungsabteile 12' und 12" gegliedert. Diese Unterteilung erfolgt durch eine Zwischenwand 13. Fig. 3 veranschaulicht, dass die Unterteilung etwa sektorförmig verläuft, wobei das erste Behandlungsabteil 12' wenigstens etwa 50% der Querschnittsfläche, vorzugsweise aber ²/₃ bis ¾ des Querschnitts einnimmt. Dagegen nimmt das Abteil 12" den Rest des verfügbaren Raumes ein. An sich könnte aber eine Unterteilung auch durch - in Draufsicht bzw. im Schnitt entsprechend Fig. 3 - radiale Unterteilungswände rund um die Längsachse A des Kristallisationsapparates 10 erfolgen. Wenn im dargestellten Ausführungsbeispiel auch nur zwei Abteile 12', 12" dargestellt sind, so können gewünschtenfalls auch mehr als zwei Abteile durch mindestens eine weitere Zwischenwand vorgesehen werden.

Die rotationssymetrische Ausbildung gewährleistet ein hohes Volumen/Oberflächenverhältnis, so dass einerseits die Wärmeverluste gering sind, anderseits eine gleichmässige Temperatur im Behandlungsraum 12 leichter gewährleistet ist. Der Behandlungsraum 12 ist über mindestens eine Einfüllöffnung 14 mit dem Kunststoffmaterial beschickbar. Innerhalb der Einfüllöffnung kann ein herkömmlicher Rotor R zur Verteilung des Kunststoffmaterials beim Einlass in den Behandlungsraum über einen oberen Boden 16' vorgesehen sein. Darunter ist wegen des relativ grossen Volumens des Abteils 12' bzw. auch aus Platzgründen die Wand 13 zweckmässig mit einem trichterförmigen Abweisabschnitt 13' versehen, der ihr auch erhöhte Steifheit verleiht. Durch den Abschnitt 13' gleitet also das Kunststoffmaterial schräg nach abwärts (in Fig. 2 nach links) und gelangt so in das erste oder Vorkristallisations-Abteil 12'.

Der Behandlungsraum 12 wird von heissem, inerten Behandlungsgas, wie Stickstoff, durchströmt, zu welchem Zweck ein Gaseinlassstutzen 15 vorgesehen ist. Das Gas strömt sodann entsprechend den Pfeilen 17 aufwärts und durch einen perforierten Boden 16. Es versteht sich aber, dass es im Rahmen der Erfindung durchaus möglich ist, mindestens zwei Gaseinlässe 15 so vorzusehen, dass der eine das Gas nur in das Abteil 12', der andere nur in das Abtei 12" führt, wobei durch eine solche getrennte Gaszuführung ermöglicht wird, gegebenenfalls in den beiden Abteilen 12', 12" das Kunststoffmaterial mit unterschiedlichen Gasmengen und/oder -geschwindigkeiten und/oder - temperaturen zu behandeln. Beispielsweise könnte es vorteilhaft sein, im Abteil 12' eine höhere Gasgeschwindigkeit vorzusehen, um eine rasche oberflächliche Antrocknung der Kunststoffpellets zu erreichen, wogegen im Abteil 12" vielleicht zwar eine geringere Geschwindigkeit, aber eine höhere Temperatur des Behandlungsgases vorgesehen wird.

Dadurch, dass einerseits eine relativ grosse Strömungsgeschwindigkeit des Gases vorgesehen wird und anderseits der Behandlungsraum 12 sich nach oben zu sowohl durch den Trichterabschnitt 13' als auch durch eine Vergrösserung des Durchmessers der äusseren Wand 11 in einem oberen Abschnitt 11' erweitert, ergeben sich die Bedingungen für ein sog. Sprudelbett, bei dem das Kunststoffmaterial sehr stark fluidisiert wird. Dadurch werden die Pellets von allen Seiten von Gas umspült und oberflächlich getrocknet. Amorphe Pellets sind etwas leichter als fertig kristallisierte, und obwohl der Unterschied nicht sehr gross ist, trägt er dazu bei eine Selektion von noch amorphem und schon teilweise kristallisiertem Material durchzuführen, wenn der Übergang vom Abteil 12' in das Abteil 12" an der Unterseite der Zwischenwand 13 gewählt wird, wo eine Passage 18 eingezeichnet ist. Es versteht sich, dass es beispielsweise vorteilhaft sein kann, wenn die Zwischenwand 13 über nach unten ragende Stege mit dem Boden 16 verbunden und auf ihm abgestützt ist, so dass sich eine Reihe solcher Freiräume 18 bildet.

Die Höhe der Passage richtet sich nach dem Gesamtvolumen, des Behandlungsraumes 12, dem Füllungsgrad desselben und der Art des zu behandelnden Materials. Es ist daher im Rahmen der Erfindung durchaus möglich, eine Verstelleinrichtung für die Höhe dieses Freiraumes 18, beispielsweise einen Schieber, vorzusehen, der etwa spaltförmig sein und das untere Ende der Zwischenwand 13 begrenzen kann. Gegebenenfalls wird die Wand 13 durch (nicht dargestellte) radiale Speichen, besonders im oberen Teil des Behandlungsraumes, gegebenenfalls aber auch im unteren, in ihrer vertikalen Lage gesichert. Im allgemeinen hat sich aber gezeigt, dass es einer Verstelleinrichtung für die Höhe des Freiraumes 18 nicht bedarf und dieser unveränderlich gewählt werden kann. So hat sich eine Spalthöhe für den Freiraum 18 von 3 bis 8 cm, insbesondere um 5 cm, als durchaus zweckmässig herausgestellt.

Falls der Kristallisator 10 kontinuierlich betreibbar sein soll, wie es bevorzugt ist, muss eine stets offene Entleerungsöffnung 19 vorgesehen werden, die nach Fig. 2 an der Oberseite des Kristallisationsabteiles 12" im Endbereich eines Entleerrohres 20 vorgesehen ist, welches das Material an seinem unteren Ende nach aussen führt. Die Tatsache, dass der Freiraum 18 unter der Zwischenwand 13 liegt, die Entleerungsöffnung aber oben, bewirkt eine etwa mäanderförmige oder spitzkehrenartige Bahn entsprechend den Pfeilen 21, welche das Kunststoffmaterial durchlaufen muss, um von der Einfüllöffnung 14 zur Entleeröffnung 19 zu gelangen. Dies verlängert einerseits die Verweilzeit in den Abteilen, beugt aber anderseits auch einem "Kurzschluss" vor, der dann gegeben wäre, könnte das Material vom Freiraum 18 direkt in eine unten angebrachte Entleeröffnung übertreten. Da bereits im Abteil 12' (Vorkristallisation) der Gewichtsanteil an amorphem Material auf unter die Hälfte gefallen ist, bedarf es nur mehr einer relativ kurzen Behandlung im zweiten Abteil 12" (Nachkristallisation), um beinahe 100% an Kristallinanteil zu erhalten, weswegen dieses Abteil 12" verhältnismässig klein ausgebildet werden kann. Eine Bahn entsprechend den Pfeilen 21 wird aber auch dann zweckmässig sein, wenn mehr als nur eine Zwischenwand 13 vorgesehen ist, in welchem Falle dann das Material nach der Aufwärtsbewegung im Abteil 12" in einem dritten Abteil wieder eine Abwärtsbewegung durchführen könnte und so die Entleerungsöffnung zweckmässig im Bodenbereich angeordnet wäre.

Aus Fig. 3 sind einige geometrische Verhältnisse der Konstruktion des Kristallisators 10 ersichtlich. Der Gaseinlass 15 und ein gegenüberliegendes Mannloch 22 ergeben in Draufsicht eine Querachse T an der auch strich-punktiert der Gasauslaß 23 (in Fig. 2 oberhalb der Schnittebene III-III) liegt. Um mit einem Mannloch 22 Zutritt zu beiden Abteilen 12' und 12" zu erlangen, ist das Abteil 12" gegenüber der Querachse T durch das Mannloch 22 um einen vorbestimmten Winkel α versetzt, der 30° bis 60° betragen kann, grundsätzlich aber nicht kritisch ist. 30° haben sich beispielsweise bewährt, da so eine geometrische Anordnung erzielt werden kann, bei der der in Fig. 3 untere Abschnitt 13" der Zwischenwand 13 etwa im mittleren Bereich des Mannloches 22 zu liegen kommt. Da im Abteil 12" der gewünschte Endzustand des Kunststoftmateriales erreicht werden soll, ist ihm vorzugsweise mindestens eine Überwachungseinrichtung zugeordnet, beispielsweise ein in das Abteil 12" "blickendes" Spektrometer, das an Hand des ermittelten Spektrogramms den Kristallisationszustand des Kunststoffes erkennt. Mindestens aber kann eine solche Überwachungseinrichtung in Form eines Schauglases 24 verwirklicht sein. Natürlich kann aber eine solche Überwachungseinrichtung bereits im vorhergehenden Abteil vorgesehen werden, falls dies gewünscht wird.

Im Anschluss an den Kristallisator (Stufe 2 in Fig. 1) gelangt das Kunststoffmaterial nach dem Schema der Fig. 1 in einen Vorerhitzer 3, der in seiner bevorzugten baulichen Ausgestaltung in den Fig. 4 und 5 zu sehen ist. Der Pfeil 10' in Fig. 4 deutet an, dass an dieser Stelle das vom Kristallisator 10 kommende Material in die Einfüllöffnung eines Schachtes 31 des Vorerhitzers (Vorkondensators) 30 eintritt. Der Schacht 31 ist innerhalb einer äusseren, etwa kreisförmigen Wandung 30' von rechteckigem Querschnitt, wie besonders aus Fig. 3 zu ersehen ist. Das Seitenverhältnis der Längsseite L zur Breitseite B beträgt beispielsweise etwa 1:3 bis 1:10, vorzugsweise 1:5 bis 1:8, insbesondere um 1:6. Der Schacht 31 ist beidseits durch Lochbleche, Siebe oder dgl. 32 begrenzt. Dadurch sind über die gesamte Längsseite L gleichmässige Strömungsverhältnisse und Behandlungsvoraussetzungen geschaffen, wozu noch kommt, dass die vertikale Anordnung des Schachtes 31 zu einer gleichmässigen Dichte des Materials über den gesamten Schachtquerschnitt führt.

Wie ersichtlich, ist der allgemein als Wärmetauscher bezeichenbare Apparat 30 in mehrere Stufen unterteilt, die unterschiedliche Funktion besitzen. Wenn nun etwa N₂ als Inertgas zur Behandlung verwendet wird, so kann dieses mit relativ geringer Temperatur bei 33 eintreten, um in einem durch eine obere Wand 35 abgeschlossenen Abteil 34 das behandelte Gut wieder auf eine geringere Temperatur zu bringen bzw. flüchtige Verbindungen, die in einem der oberen Abteile freigesetzt wurden, auszutreiben.

Nachdem der Stickstoff im Abteil 34 durch die Siebwände 32 des Schachtes 31 geströmt ist, verlässt er dieses Kühlabteil 34 und wird anschliessend mit einer elektrischen Heizeinrichtung E auf eine höhere Temperatur gebracht. Dabei wird eine Temperatur, beispielsweise von wenigstens 185°C, erreicht, die als Haltetemperatur für die Vorkondensation in einem Abteil 36 dient. Auch hier durchströmt das Gas im Zick-Zack wieder den Schacht 31, d.h. in Gegenrichtung zur Strömung im darunterliegenden Abteil 34, um anschliessend wiederum in einer Heizeinrichtung E weiter erhitzt zu werden und ein Vorkondensationsabteil 37 zu durchlaufen, wo das Kunststoffmaterial beispielsweise mit einer Gastemperatur zwischen 200°C und 240°C, gegebenenfalls aber auch bis zu 260°C, behandelt wird. Die Strömungsrichtung in diesem Abteil 37 ist wiederum entgegengesetzt zu der des benachbarten Abteils 36. Im obersten Abteil 38 wird dann nach nochmaliger Erhitzung gegebenenfalls die höchste Temperatur zum Vorerwärmen des noch auf tieferer Temperatur liegenden Kunststoffmaterials erreicht. Dies ist aber nicht unbedingt erforderlich, denn man kann auch die Temperaturführung so wählen, dass in der letzten, obersten Heizeinrichtung E gerade nur die Temperaturverluste im darunter liegenden Abteil 36 ausgeglichen werden. Auf diese Weise strömt das Behandlungsgas im wesentlichen aufwärts, während das Kunststoffmaterial im Schacht 31 abwärts sinkt, also im Gegenstrom. Die Sinkgeschwindigkeit im Schacht 31 kann durch kontrollierte Entleerung am unteren Ende, beispielsweise mittels einer Zellenradschleuse 39 gesteuert werden, deren Drehzahl veränderlich einstellbar oder, z.B. über Temperatursensoren am Ende des Schachtes 31, regelbar ist. Es versteht sich, dass gegebenenfalls auch mehr als vier Abteile, z.B. sechs oder acht, oder weniger oder gar nur eines vorgesehen sein kann, je nach den Aufgaben, die dem Wärmetauscher 30 übertragen werden, wie nur Vorerhitzung, Vorkondensation, Kondensation etc. Auch ist es nicht erforderlich, das Gas im Zick-Zack zu führen, sondern es könnten für einzelne Abteile gesonderte Gaseinlässe vorgesehen werden, beispielsweise um die Strömungsmengen, die Gasart und/oder -geschwindigkeit in den einzelnen Abteilen 34 bis 38 zu variieren.

## Patentansprüche

1. Vorrichtung zum mindestens zweistufigen Kristallisieren von Kunststoffmaterial, insbesondere Polyäthylenterephthalat, mit einem Behandlungsraum (12) zur Aufnahme des stückigen bzw. pelletartigen Kunststoffmaterials, der über eine Einfüllöffnung (14) mit dem Kunststoffmaterial beschickbar und über eine Entleerungsöffnung (19) entleerbar ist, einer Zuführeinrichtung (15) für ein Behandlungsgas über einen Bodenbereich (16) des Behandlungsraumes (12) und mindestens einer im Behandlungsraum (12) vorgesehenen Zwischenwand (13) zur Unterteilung des Behandlungsraumes (12) in mindestons zwei Abteile (12', 12"), die über einen Freiraum (18) zum Verbringen des Kunststoffmateriales von einem Abteil (12', 12") in das andere miteinander verbunden sind, so dass das Kunststoffmaterial von der Einfüllöffnung (14) zur Entleerungsöffnung (19) eine vorbestimmte, sich im wesentlichen vertikal erstreckende Bahn (21) durchläuft, **dadurch gekennzeichnet, dass** die beiden Abteile (12', 12") in einem gemeinsamen, rotationssymmetrischen Gehäuse (11) mit einer Rotationsachse A vorgesehen sind und die Abteile (12', 12") in einem zur Achse A senkrechten beliebigen Querschnitt Sektoren bestimmen, wobei mindestens ein Freiraum (18) an der Unterseite der zugehörigen Zwischenwand (13) und eine Entleerungsöffnung (19) an der Oberseite des darauf folgenden Abteils (12") vorgesehen sind.

2. Vorrichtung nach Anspruch 1, **dadurch gekennzeichnet, dass** die Bahn (21) durch Anordnung von Freiraum bzw. Freiräumen (18) und Entleerungsöffnung (19) jeweils auf unterschiedlichen Niveaus im Längsschnitt durch den Behandlungsraum (12) etwa zick-zack- oder mäanderförmig gestaltet ist.

3. Vorrichtung nach einem der vorhergehenden Ansprüche, **dadurch gekennzeichnet, dass** eine Zwischenwand (13) unterhalb der Einfüllöffnung (14) zur Ablenkung des eintretenden Kunststoffmaterials mit einem Trichterabschnitt (13') ausgebildet ist, um das Material in ein vorhergehendes Abteil (12') abzulenken, und damit das jeweils nachfolgende Abteil (12") durch den Trichterabschnitt (13') mindestens teilweise abdeckt.

4. Vorrichtung nach einem der vorhergehenden Ansprüche, **dadurch gekennzeichnet, dass** das erste Abteil (12') einen grösseren Sektor als der Hälfte, vorzugsweise sogar grösser als 2/3 der Fläche in Draufsicht auf den wenigstens annähernd rotationssymetrischen Behandlungsraum (12), einnimmt, und dass diesem ersten Abteil (12') ein zweites, entsprechend kleineres Abteil (12") nachfolgt.

5. Vorrichtung nach einem der vorhergehenden Ansprüche, **dadurch gekennzeichnet, dass** mindestens einem Abteil (12"), z.B. dem letzten, eine Überwachungsanordnung, wie ein Schauglas (24), zugeordnet ist.

6. Vorrichtung nach einem der vorhergehenden Ansprüche, **dadurch gekennzeichnet, dass** der Bodenbereich des Behandlungsraumes (12) als perforierter Boden (16) eines Wirbelbettes ausgebildet ist.

7. Verfahren zum Behandeln von Kunststoffmaterial, insbesondere Polyäthylenterephthalat, mit einer Vorrichtung nach einem der vorhergehenden Ansprüche, bei dem das Material relativ tiefer Temperatur zunächst unter Erwärmung kristallisiert wird, wobei das Material wenigstens 10 Minuten lang in mindestens 2 Räumen (12', 12") einem heissen Behandlungsgas ausgesetzt und damit zum Kristallisieren auf eine Temperatur oberhalb von 135° C, z.B. 140 bis 180° C gebracht wird, bevor das Material einer weiteren Erhitzung bzw. Kondensation in fester Phase zugeführt wird, indem es in einem mindestens 2 und bis zu 8 Stufen aufweisenden Vorerhitzungsraum (31) auf eine Temperatur von zumindest 158° C, vorzugsweise mindestens 200° C und insbesondere auf etwa 220° C gebracht wird, **dadurch gekennzeichnet, dass** zur Vergleichmässigung der Behandlung - und damit der Produktqualität - zunächst das zu kristallisierende Material von dem einen Raum (12') über eine Passage (18) in den anderen Raum (12") gelangt, wobei sich die Passage an der Unterseite der die beiden Räume (12', 12") trennenden Zwischenwand (13) befindet, und anschliessend das kristallisierte Material in die Form eines, im Querschnitt viereckigen insbesondere rechteckigen Schüttgutstromes im wesentlichen gleichmässiger Schüttung über den Querschnitt gebracht und jeweils von einer Seite (L) des Viereck-Querschnittes her mit dem Behandlungsgas durchströmt wird, wobei das Verhältnis der Rechteckseiten (B: L) des Querschnittes des Schüttgutstromes etwa 1:2 bis 1:15, vorzugsweise 1:3 bis 1:10 beträgt, und das Behandlungsgas von der jeweils grösseren Rechteckseite (L) her durch den Schüttgutstrom geleitet wird.

8. Verfahren nach Anspruch 7, **dadurch gekennzeichnet, dass** das heisse Behandlungsgas während des Kristallisierens mit einer Temperatur von 165 bis 185°C zugeführt wird.

9. Verfahren nach einem der Ansprüche 7 oder 8, **dadurch gekennzeichnet, dass** das Behandlungsgas in wenigstens zwei Stufen jeweils höherer Temperatur an jeweils eine Seite (L) des Viereckquerschnittes gebracht wird, vorzugsweise jeweils von der entgegengesetzten Seite her.

10. Verfahren nach Anspruch 9, **dadurch gekennzeichnet, dass** das Behandlungsgas im Gegenstrom von einer Stufe (34-37) niedrigerer Temperatur zu einer Stufe (35-38) höherer Temperatur geführt wird.

11. Verfahren nach Anspruch 9 oder 10, **dadurch gekennzeichnet, dass** das Behandlungsgas in wenigstens drei Stufen (34-37 bzw. 35-38) zig-zack- oder mäanderförmig mehrfach durch den Viereckquerschnitt des Schüttgutes geführt wird.

12. Verfahren nach Anspruch 10 oder 11, **dadurch gekennzeichnet, dass** das Schüttgut mit Viereckquerschnitt im wesentlichen vertikal, das Behandlungsgas im wesentlichen horizontal durch den Viereckquerschnitt geführt wird.

13. Verfahren nach einem der vorhergehenden Ansprüche, **dadurch gekennzeichnet, dass** Vorkristallisation und Kristallisation in einem Zeitraum von 10 bis 80 Minuten, vorzugsweise 15 bis 40 Minuten, insbesondere von etwa 20 bis 30 Minuten durchgeführt werden.

14. Verfahren nach einem der vorhergehenden Ansprüche, **dadurch gekennzeichnet, dass** die auf die Kristallisation folgende Erhitzung, einschliesslich einer Vorkondensation, in einem Zeitraum von 60 bis 120 Minuten, insbesondere von etwa 90 Minuten, durchgeführt wird.

## Claims

1. A device for crystallization of plastic material, in particular polyethylene terephthalate, in at least two stages, having a treatment space (12) to receive the lumpy and/or pellets of plastic material, which can be charged together with the plastic material through a filling opening (14) and can be discharged through a discharge opening (19), a feed mechanism (15) for a treatment gas through a bottom area (16) of the treatment space (12) at at least one partition (13) provided in the treatment space (12) to subdivide the treatment space (12) into at least two compartments (12', 12") which are connected by a clearance (18) for passing the plastic material from one compartment (12', 12") into the other, so that the plastic material travels along an essentially vertical predetermined path (21) from the filling opening (14) to the discharge opening (19), **characterized in that** the two compartments (12', 12") are provided with an axis A of rotation in a joint rotationally symmetrical housing (11), and the compartments (12', 12") determine sectors in any desired cross section perpendicular to the axis A, whereby at least one clearance (18) is provided at the lower side of the respective partition (13) and a discharge opening (19) is provided at the top side of the next following section (12").

2. The device according to Claim 1, **characterized in that** the path (21) follows an approximately zigzag or meandering pattern through the treatment space (12) due to the arrangement of the clearance or clearances (18) and the discharge opening (19) at different levels in the longitudinal section.

3. The device according to one of the preceding claims, **characterized in that** a partition (13) is designed with a funnel section (13') beneath the filling opening (14) to deflect the plastic material entering it into a preceding compartment (12') and thus at least partially cover the following compartment (12") by the frontal section (13').

4. The device according to one of the preceding claims, **characterized in that** the first compartment (12') takes up a sector larger than half of the area, preferably larger than 2/3 of the area, as seen from above, on the at least approximately rotationally symmetrical treatment space (12), and a second compartment (12"), which is smaller accordingly, follows this first compartment (12').

5. The device according to one of the preceding claims, **characterized in that** at least one compartment (12"), e.g., the last is provided with a monitoring arrangement such as an inspection glass (24).

6. The device according to one of the preceding claims, **characterized in that** the bottom area of the treatment space (12) is designed as a perforated bottom (16) of a fluidized bed.

7. A method of treating plastic material, in particular polyethylene terephthalate, with a device according to one of the preceding claims, in which the material is crystallized first at a relatively low temperature while heating, whereby the material is exposed to a hot treatment gas for at least 10 minutes in at least two compartments (12', 12") and thus is made to crystallize at a temperature above 135 °C, e.g., 140 °C to 180 °C before the material is sent for further heating and/or condensation in the solid phase by bringing it to a temperature of at least 158 °C, preferably at least 200 °C and especially approximately 220 °C in a preheating space (31) having at least two stages and up to eight stages, **characterized in that** to make the treatment quality more uniform and thus the product quality more uniform, the material to be crystallized first goes from the one compartment (12') through a passage (18) into the other compartment (12"), with the passage being located on the underside of the partition (13) dividing the two compartments (12', 12"), and then the crystallized material in the form of a stream of bulk material which has a quadrilateral cross section, in particular a rectangular cross section, in a packing that is essentially uniform is conveyed over the cross section, and the treatment gas flows through it from one side (L) of the quadrilateral cross section, where the ratio of the rectangular sides (B:L) of the cross section of the stream of bulk material amounts to approximately 1:2 to 1:15, preferably 1:3 to 1:10, and the treatment gas is directed from the larger rectangular side (L) through the stream of bulk material.

8. The method according to Claim 7, **characterized in that** the hot treatment gas is supplied at a temperature of 165 °C to 185 °C during crystallization.

9. The method according to one of Claims 7 or 8, **characterized in that** the treatment gas is brought to one side (L) of the quadrilateral cross section, preferably from the opposite side, in at least two stages, each being at a higher temperature.

10. The method according to Claim 9, **characterized in that** the treatment gas is carried in countercurrent from a stage (34-37) of a lower temperature to a stage (35-38) of the higher temperature.

11. The method according to Claim 9 or 10, **characterized in that** the treatment gas is passed in a zigzag or meandering pattern repeatedly through the quadrilateral cross section of the bulk material in at least three stages (34-37 and/or 35-38).

12. The method according to Claim 10 or 11, **characterized in that** the bulk material having a quadrilateral cross section is guided essentially vertically through the cross section, and the treatment gas is guided essentially horizontally through the quadrilateral cross section.

13. The method according to one of the preceding claims, **characterized in that** the precrystallization and crystallization are carried out in a period of time from 10 to 80 minutes, preferably 15 to 40 minutes, in particular approximately 20 to 30 minutes.

14. The method according to one of the preceding claims, **characterized in that** the heating which follows crystallization, including precondensation, is performed over a period of time of 60 to 120 minutes, in particular approximately 90 minutes.

## Revendications

1. Dispositif pour la cristallisation en au moins deux stades de matière plastique, en particulier de polyéthylène téréphtalate, avec un espace de traitement (12) pour accueillir la matière plastique en morceaux ou boulettes pouvant être alimenté avec la matière plastique via une ouverture d'admission (14) et être vidé via une ouverture d'évacuation (19), un dispositif d'acheminement (15) pour un gaz de traitement via une zone du fond (16) de l'espace de traitement (12) et au moins une paroi intermédiaire (13) prévue dans l'espace de traitement (12) pour la subdivision de l'espace de traitement (12) en au moins deux compartiments (12', 12''), lesquels sont reliés via une zone de dégagement (18) pour l'acheminement de la matière plastique d'un compartiment (12', 12'') dans l'autre, de. sorte que la matière plastique suit une trajectoire (21) prédéfinie depuis l'ouverture d'admission (14) jusqu'à l'ouverture d'évacuation (19) s'étendant essentiellement verticalement, **caractérisé en ce que** les deux compartiments (12', 12'') sont prévus avec un carter (11) commun à symétrie de révolution avec un axe de rotation A, et que les compartiments (12', 12'') déterminent des secteurs selon une section transversale verticale quelconque par rapport à l'axe A, moyennant quoi au moins une zone de dégagement (18) est prévue du côté inférieur de la paroi intermédiaire (13) allant avec, et une ouverture d'évacuation (19) sur le côté supérieur du compartiment suivant (12'').

2. Dispositif selon la revendication 1, **caractérisé en ce que** la trajectoire (21) est conçue en forme de zigzag ou méandres par l'aménagement d'une ou plusieurs zones de dégagement (18) et ouvertures d'évacuation (19) sur des niveaux respectifs différents en coupe longitudinale de l'espace de traitement (12).

3. Dispositif selon l'une quelconque des revendications précédentes, **caractérisé en ce qu'**une paroi intermédiaire (13) est formée sous l'ouverture d'admission (14) pour détourner la matière plastique entrante à l'aide d'un segment en forme d'entonnoir (13') pour détourner la matière vers un compartiment précédent (12'), et qui recouvre ainsi au moins partiellement le compartiment respectif suivant (12'') en raison du segment en forme d'entonnoir (13').

4. Dispositif selon l'une quelconque des revendications précédentes, **caractérisé en ce que** le premier compartiment (12') occupe un secteur plus grand que la moitié, et de préférence même supérieur au 2/3 de la surface vue de dessus de l'espace de traitement (12) à symétrie de révolution au moins approximative, et que ce premier compartiment (12') et suivi d'un deuxième compartiment (12'') proportionnellement plus petit.

5. Dispositif selon l'une quelconque des revendications précédentes, **caractérisé en ce qu'**un dispositif de surveillance tel un verre de regard (24) est affecté à au moins un compartiment (12''), par exemple au dernier.

6. Dispositif selon l'une quelconque des revendications précédentes, **caractérisé en ce que** la zone du fond de l'espace de traitement (12) se présente sous la forme d'un fond perforé (16) d'un lit fluidisé.

7. Procédé pour le traitement de matières plastiques, en particulier de polyéthylène téréphtalate, avec un dispositif selon l'une quelconque des revendications précédentes, selon lequel les matières à température relativement basse sont tout d'abord cristallisées par réchauffement, moyennant quoi les matières sont exposées au moins 10 minutes dans au moins 2 chambres (12', 12'') à un gaz de traitement chaud pour être cristallisées à une température supérieure à 135°C, par exemple à 140°C à 180°C, avant d'acheminer les matières vers un autre échauffement ou condensation à l'état solide, en l'amenant à une température d'au moins 158°C et de préférence d'au moins 200°C et en particulier d'environ 200°C à l'intérieur d'un espace de pré-réchauffage (31), **caractérisé en ce que** dans un soucis d'homogénéisation du traitement - et par conséquent de la qualité du produit - les matières à cristalliser parviennent tout d'abord d'un espace (12') via un passage (18) dans un autre espace (12''), le passage se trouvant du côté inférieur de la paroi intermédiaire (13) séparant les deux espaces (12', 12''), et qu'ensuite les matières cristallisées sont acheminées sous la forme d'un flux de produit en vrac au profil carré et en particulier rectangulaire, en un débit essentiellement régulier en coupe transversal, et est parcouru depuis un côté (L) respectif du profil carré par le gaz de traitement, moyennant quoi le rapport des côtés du rectangle (B:L) du profil du flux de produit en vrac correspond approximativement à 1:2 à 1:15 et de préférence à 1:3 à 1 :10, et le gaz de traitement est conduit depuis respectivement le plus grand côté (L) du rectangle à travers le flux de produit en vrac.

8. Procédé selon la revendication 7, **caractérisé en ce que** le gaz de traitement chaud est amené lors de la cristallisation avec une température de 165°C à 185°C.

9. Procédé selon la revendication 7 ou 8, **caractérisé en ce que** le gaz de traitement est acheminé en au moins deux stades de température respectivement supérieure vers un des côtés (L) respectif du profil carré, et de préférence depuis le côté opposé respectif.

10. Procédé selon la revendication 9, **caractérisé en ce que** le gaz de traitement dans le contre-courant est amené d'un stade (34-37) à température plus basse à un stade (35-38) à température plus haute.

11. Procédé selon la revendication 9 ou 10, **caractérisé en ce que** le gaz de traitement est acheminé à plusieurs reprises en au moins trois stades (34-37 ou 35-38) en zigzag ou en formant des méandres à travers le profil carré du produit en vrac.

12. Procédé selon l'une quelconque des revendications 10 ou 11, **caractérisé en ce que** le produit en vrac au profil carré est acheminé essentiellement verticalement, et le gaz de traitement essentiellement horizontalement, à travers le profil carré.

13. Procédé selon l'une quelconque des revendications précédentes, **caractérisé en ce que** la pré-cristallisation, et la cristallisation sont réalisés dans un laps de temps compris entre 10 à 80 minutes, de préférence entre 15 à 40 minutes, et en particulier entre 20 à 30 minutes.

14. Procédé selon l'une quelconque des revendications précédentes, **caractérisé en ce que** l'échauffement qui suit la cristallisation, y compris une pré-condensation, est réalisé dans un laps de temps compris entre 60 et 120 minutes, et en particulier d'environ 90 minutes.
